(19) Europäisches Patentamt / European Patent Office / Office européen des brevets

(11) **EP 2 522 969 A2**

(12) **EUROPEAN PATENT APPLICATION**

(43) Date of publication:
**14.11.2012 Bulletin 2012/46**

(51) Int Cl.:
*G01J 3/44* (2006.01)    *G01N 21/65* (2006.01)
*G01J 3/10* (2006.01)

(21) Application number: **12003143.0**

(22) Date of filing: **02.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.05.2011 JP 2011108324**

(71) Applicant: **Sony Corporation**
**Tokyo 108-0075 (JP)**

(72) Inventor: **Tamada, Sakuya**
**Minato-ku**
**Tokyo 108-0075 (JP)**

(74) Representative: **Müller - Hoffmann & Partner**
**Innere Wiener Straße 17**
**81667 München (DE)**

(54) **Nonlinear raman spectroscopic apparatus comprising single mode fiber for generating Stokes beam**

(57)    Provided is a nonlinear Raman spectroscopic apparatus (1) including two light sources (10,20) for providing a pump/probe beam and a Stokes beam and a pulse control section (20). The two light sources are each configured to emit short-pulse laser light. The pulse control section is configured to time-delay the short-pulse laser light emitted from one of the light sources.

FIG.1

EP 2 522 969 A2

**Description**

<u>Background</u>

The present disclosure relates to a nonlinear Raman spectroscopic apparatus, a microspectroscopic apparatus, and a microspectroscopic imaging apparatus, and more specifically, to an apparatus for multiplex coherent anti-Stokes Raman spectroscopy using broadband light as a Stokes beam.

The laser Raman spectroscopy is an analytical technique for separation of light scattered from a test sample, which is exposed to single-wavelength laser light as a pump beam. The Stokes beam or anti-Stokes beam being the scattered light shows a wave number shift against the pump beam, and the shift is observed as a specific spectrum corresponding to the molecular vibration mode unique to the substance of the test sample. Therefore, as well as the infrared spectroscopy, the Raman spectroscopy is widely used as spectroscopy in the molecular fingerprint region for substance analysis/assessment, medical diagnosis, and development of organic substances such as new pharmaceuticals and food products.

The nonlinear Raman spectroscopy is a technique for measurement of the Raman scattering light similarly to the previous laser Raman spectroscopy described above, but has a difference therefrom of using the third-order nonlinear optical process. The third-order nonlinear optical process is to detect light to be scattered from three types of beams, including a pump beam being excitation light, a probe beam, and a Stokes beam. Such a third-order nonlinear optical process is exemplified by CARS (Coherent anti-Strokes Raman Scattering), CSRS (Coherent Stokes Raman Scattering), Stimulated Raman Loss Spectroscopy, and Stimulated Raman Gain Spectroscopy.

With the CARS spectroscopy, generally, a test sample is irradiated with a pump beam and a Stokes beam with a wavelength longer than that of the pump beam. After the irradiation, nonlinear Raman scattering light with a wavelength shorter than that of the pump beam scattered from the sample is separated, thereby obtaining a spectrum (for example, see Japanese Unexamined Patent Application Publication Nos. 5-288681, 2006-276667, and 2010-2256). The nonlinear Raman spectroscopy using white light as a light source to generate a Stokes beam is also previously proposed (see Japanese Unexamined Patent Application Publication No. 2004-61411 (Japanese Patent No. 3691813)).

With the previous CARS spectroscopy described above, on the other hand, the laser light in use for generating the pump beam and the Stokes beam is ultrashort pulse light of several tens of fs to several tens of ps. In this case, the resulting apparatus is disadvantageously expensive and complex. To get around this disadvantage, previously proposed is the approach of generating supercontinuum light by increasing the bandwidth of pulse light with a pulse duration of 0.1 to 10 ns using a photonic crystal fiber (PCF) (see Japanese Unexamined Patent Application Publication No. 2009-222531).

The nonlinear Raman spectroscopy typified by the CARS spectroscopy or others described above allows no influence by any fluorescence background compared with the previous Raman spectroscopy, and what is better, leads to improvement of the detection sensitivity. The nonlinear Raman spectroscopy has thus been under active research and development especially as a technology for molecular recognition imaging in biosystems.

<u>Summary</u>

With the previous nonlinear Raman spectroscopy, especially with the multiplex CARS spectroscopy described above, however, there is a disadvantage of the limited maximum incident power due to optical damage, especially serious optical damage in the vicinity of the light-incident end surface because broadband white light is generated by a PCF, a highly nonlinear fiber (HNLF), or others.

The use of the PCF or HNLF generally leads to an advantage of ensuring the broadband performance, but in the CARS spectroscopy, this advantage turns out to be a disadvantage of reducing the optical power per wavelength due to the broadband performance. The PCF also has a disadvantage of needing special processing to the end surface.

Moreover, the beam profile of the supercontinuum light (broadband light) generated by the PCF is generally not the ideal Gaussian beam profile. The laser light with such a beam profile is not desirable because it causes degradation of images to be obtained with microspectroscopy and microspectroscopic imaging.

It is thus desirable to provide a nonlinear Raman spectroscopic apparatus, a microspectroscopic apparatus, and a microspectroscopic imaging apparatus that are small in size with a high efficiency and excellent stability.

The inventor of the present disclosure has come up with the following findings as a result of his diligent experimental study to achieve the problems described above. Especially in applications to biosystems, a significant factor is the spectroscopy of a molecular vibrational spectral region of 300 to 3600 $cm^{-1}$, which is referred to as the molecular fingerprint region. Therefore, with the microspectroscopic imaging using the nonlinear Raman spectroscopy, expected are a high peak power, availability of a Gaussian beam, and the linear polarization state to enhance the nonlinear optical effect as the quality of an incoming laser beam.

When light emitted from a single-mode fiber (SMF) has a wavelength similar to or higher than the cutoff wavelength of the SMF, the resulting spatial intensity distribution of the light looks like that of an ideal Gaussian beam. In consideration thereof, the inventor of the present disclosure has studied the possibility of using the SMF being inexpensive and easy to get as an alternative to the PCF and HNLF to generate broadband white light for the Stokes beam use. With this study, the inventor found out that using the SMF leads to an ideal Gaussian beam.

Furthermore, the nonlinear Raman spectroscopy expects the electric field vectors of pulses of three beams including a pump beam, a probe beam, and a Stokes beam to all point in the same direction, and the polarization in the section of generating such beams is desirably linear. In this respect, the inventor of the present disclosure found out that using any specific SMF, especially a polarization maintaining single-mode fiber (PM-SMF) leads to an excellent linearly-polarized Stokes beam such that the present disclosure is proposed.

That is, a nonlinear Raman spectroscopic apparatus according to an embodiment of the present disclosure includes two light sources each configured to emit short-pulse laser light, and a pulse control section configured to time-delay the short-pulse laser light emitted from one of the light sources.

In the apparatus, the two light sources may include a first light source configured to generate the short-pulse laser light, and a second light source configured to generate the short-pulse laser light with a wavelength longer than that of the first light source. In this case, the pulse control section may time-delay the short-pulse laser light emitted from the second light source.

Further, the short-pulse laser light emitted from the first light source may include a Stokes beam, and the light from the second light source may be a pump/probe beam. By the pulse control section time-delaying the short-pulse laser light emitted from the second light source, a sample being a measurement target may be irradiated with the Stokes beam and the pump/probe beam at the same time.

Furthermore, the nonlinear Raman spectroscopic apparatus may further include a single-mode fiber configured to generate the Stokes beam being continuous white light from the short-pulse laser light emitted from the first light source.

Still further, the pulse control section may time-delay the short-pulse laser light by electrically controlling the second light source.

Still further, the nonlinear Raman spectroscopic apparatus may further include a detection section configured to multiplex the Stokes beam and the pump/probe beam and detect a time difference therebetween, in which a detection result of the detection section may be fed back to the pulse control section.

A microspectroscopic apparatus and a microspectroscopic imaging apparatus according to an embodiment of the present disclosure each include the nonlinear Raman spectroscopic apparatus described above.

According to the embodiments of the present disclosure, implemented are a nonlinear Raman spectroscopic apparatus, a microspectroscopic apparatus, and a microspectroscopic imaging apparatus that are small in size with a high efficiency and excellent stability.

These and other objects, features and advantages of the present disclosure will become more apparent in light of the following detailed description of best mode embodiments thereof, as illustrated in the accompanying drawings.

Brief Description of Drawings

Fig. 1 is a diagram schematically showing the configuration of a nonlinear Raman spectroscopic apparatus according to a first embodiment of the present disclosure;

Fig. 2 is a plot of the spectrum of a Stokes beam generated using a single-mode fiber with the length of 6 m, and in the plot, the horizontal axis indicates the wavelength and the vertical axis indicates the intensity;

Fig. 3 is a plot showing the wavelength distribution of light emitted from a polarization maintaining single-mode fiber when the polarization plane of incoming excitation light is adjusted to coincide with the fast or slow axis of the single-mode fiber, and in the plot, the horizontal axis indicates the wavelength and the vertical axis indicates the intensity;

Fig. 4 is a plot of the spectrum of a Stokes beam and that of a pump beam generated using a single-mode fiber with the length of 6 m, and in the plot, the horizontal axis indicates the wavelength and the vertical axis indicates the intensity;

Fig. 5 is a plot of the CARS spectrum of a plate made of polymethyl methacrylate with the thickness of 2 mm, and in the plot, the horizontal axis indicates the wave number and the vertical axis indicates the intensity;

Fig. 6 is a diagram schematically showing the configuration of a nonlinear Raman spectroscopic apparatus according to a second embodiment of the present disclosure;

Fig. 7 is a conceptual diagram showing the configuration of a nonlinear Raman spectroscopic system according to a third embodiment of the present disclosure;

Fig. 8 is a plot of the autocorrelation function of the intensity distribution of a Stokes beam, and in the plot, the horizontal axis indicates the wave number and the vertical axis indicates the intensity;

Fig. 9 is a plot showing the intensity distribution of a Stokes beam, and in the plot, the horizontal axis indicates the wave number and the vertical axis indicates the intensity;

Fig. 10 is a plot of the CARS spectrum of a plate made of polyethylene terephthalate with the thickness of 1 mm after normalization thereof by Expression 6;

Fig. 11 is a diagram showing how to derive the conditional expression of Expression 7;

Fig. 12 is a plot showing the intensity distribution of a Stokes beam whose short-wavelength-side component is cut off by an LPF (Low-Pass Filter), and in the plot, the horizontal axis indicates the wavelength and the vertical axis indicates the intensity;

Fig. 13 is a plot of the CARS spectrum of a plate made of polyethylene terephthalate with the thickness of 1 mm, which is measured based on the intensity distribution of the Stokes beam of Fig. 12;

Fig. 14 is a plot of the CARS spectrum of a plate made of polyethylene with the thickness of 1 mm, which is measured based on the intensity distribution of the Stokes beam of Fig. 12;

Fig. 15 is a conceptual diagram showing the configuration of a nonlinear Raman spectroscopic apparatus according to a fourth embodiment of the present disclosure;

Fig. 16 is a plot showing the intensity distribution of a Stokes beam when a polarization maintaining single-mode fiber with the length of 12 m is in use and when the average excitation power is 50 mW, and in the plot, the horizontal axis indicates the wavelength and the vertical axis indicates the intensity;

Fig. 17 is a plot showing the intensity distribution of a Stokes beam after the passages through the spectrum of a pump/probe beam with the wavelength of 561 nm and a long-pass filter with the edge wavelength of 605 nm, and in the plot, the horizontal axis indicates the wavelength and the vertical axis indicates the intensity;

Fig. 18 is a plot showing the intensity distribution of the Stokes beam of Fig. 17, and in the plot, the horizontal axis indicates the wave number and the vertical axis indicates the intensity;

Fig. 19 is a plot showing the intensity distribution of a Stokes beam when a polarization maintaining single-mode fiber with the length of 6 m is in use and when the average excitation power is 50 mW, and in the plot, the horizontal axis indicates the wavelength and the vertical axis indicates the intensity;

Fig. 20 is a plot showing the intensity distribution of the Stokes beam of FIG. 19 using a Raman shift expressed in wave number with reference to the wavelength of 561 nm of a pump/probe beam, and in the plot, the horizontal axis indicates the wave number and the vertical axis indicates the intensity;

Fig. 21 is a conceptual diagram showing the configuration of a nonlinear Raman spectroscopic apparatus in a modification according to a fourth embodiment of the present disclosure;

Fig. 22 is a conceptual diagram showing the configuration of a nonlinear Raman spectroscopic apparatus according to a fifth embodiment of the present disclosure; and

Fig. 23 is a conceptual diagram showing the configuration of a nonlinear Raman spectroscopic apparatus according to a sixth embodiment of the present disclosure.

Detailed Description of Embodiments

Hereinafter, embodiments of the present disclosure will be described with reference to the drawings. The following description is in all aspects illustrative and not restricted to the embodiments below. The description is given in the following order.

1. First Embodiment
(Exemplary apparatus using a single-mode filer for generation of a Stokes beam)
2. Second Embodiment
(Exemplary apparatus including an optical fiber on the optical path of a pump beam and that of a probe beam)
3. Third Embodiment
(Exemplary system including a computation section for normalization processing of a measuring spectrum)
4. Fourth Embodiment
(Exemplary apparatus including two light sources)
5. Modification of Fourth Embodiment
(Exemplary apparatus including a feedback mechanism)
6. Fifth Embodiment
(Exemplary apparatus including AOTF (Acousto-Optic Tunable Filter))
7. Sixth Embodiment
(Exemplary apparatus using lock-in amplifier)

[1. First Embodiment]

[Entire Configuration of Apparatus]

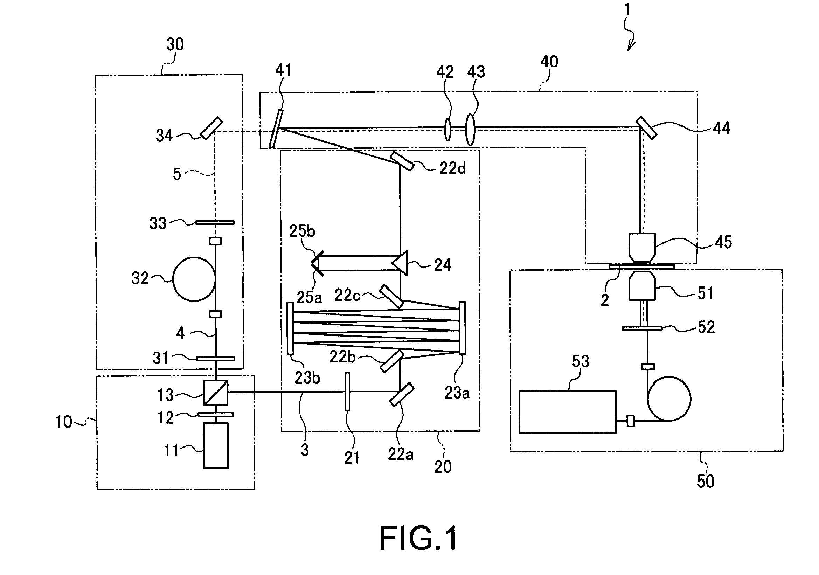

First of all, described is a nonlinear Raman spectroscopic apparatus according to a first embodiment of the present disclosure. Fig. 1 is a diagram schematically showing the configuration of the nonlinear Raman spectroscopic apparatus of the embodiment. The nonlinear Raman spectroscopic apparatus 1 in this embodiment is a CARS spectroscopic apparatus, and as shown in Fig. 1, is configured to include a light source section 10, a pump/probe beam generation section 20, a Stokes beam generation section 30, a light irradiation section 40, and a measurement section 50.

[Light Source Section 10]

The light source section 10 is at least provided with a laser 11 emitting pulse light, and a polarized beam splitter 13 that splits the pulse light for allocation into the pump/probe beam generation section 20 and into the Stokes beam generation section 30. The light source section 10 emits predetermined pulse light to the pump/probe beam generation section 20 and to the Stokes beam generation section 30.

The laser 11 is not restricted in type as long as the laser generates pulse light with the pulse duration of 0.2 to 10 ns, the pulse peak power of 50 W to 5 kW, and the wavelength of 500 to 1200 nm. Such a laser is exemplified by a Q-switched Nd:YAG laser that is inexpensive and small in size, oscillates at 1064 nm, and generates sub-nano second repeated pulses, for example. Such a Q-switched laser is not the only option, and other possibilities include a mode-locked Nd:YAG laser, an $Nd:YVO_4$ or Nd:YLF picosecond laser, a Yb doped fiber picosecond laser, and others.

When any short-wavelength light is used for a measurement, the light coming from any of the lasers described above may be used as excitation light to generate SHG (Second Harmonic Generation) light using optical crystal such as KTP (potassium titanyl phosphate) or LBO (lithium triborate) crystal for second harmonic generation use. In this case, when the excitation light is with a wavelength of 1064 nm, the resulting wavelength after wavelength conversion by the second harmonic generation is 532 nm. As such, with the nonlinear Raman spectroscopic apparatus 1 of the embodiment, any laser emitting light with a wavelength of 532 nm or 1064 nm is appropriately used.

Herein, the wavelength of the pulse light coming from the light source section 10 is not restricted to those described above, and if with an Nd:YAG laser, for example, the laser is available for oscillation of light with wavelengths of 1319 nm, 1122 nm, and 946 nm other than 1064 nm. If with an $Nd:YVO_4$ laser, the laser is available for oscillation of light with wavelengths of 1342 nm and 914 nm other than 1064 nm. Moreover, an Nd:YLF laser is available for oscillation of light with a wavelength of 1053 nm or 1047 nm, and a Yb:YAG laser is available for oscillation of light with a wavelength of 1030 nm.

With the second harmonic generation using such wavelengths as fundamental wavelengths, the resulting SHG light has a wavelength not only of 532 nm but also of 660 nm, 561 nm, 473 nm, 671 nm, 457 nm, 527 nm, 523 nm, and 515 nm.

The concern here is that if the pulse duration is less than 0.2 ns, the resulting laser mechanism becomes complicated and expensive. On the other hand, if the pulse duration is more than 10 ns, the pulse energy per shot is increased too much, specifically, the pulse energy of the laser light becomes 5 $\mu$J or more, thereby damaging the end surface(s) of an optical fiber or impairing the performance stability of a Stokes beam. As a matter of course, the power consumption during the laser operation is increased. In consideration thereof, the pulse light coming from the laser 11 desirably has the pulse duration in a range of 0.4 to 5 ns.

The pulse light desirably has a high peak power for producing the third-order nonlinear optical effect to obtain continuous white light in an optical fiber short in length. Therefore, in the nonlinear Raman spectroscopic apparatus 1 of this embodiment, with the aim of preventing the increase of the pulse energy, the pulse duration is reduced to lower the pulse energy per shot because a high peak power is desirable, thereby preventing an increase of the average power responding to the repetition frequency. As an example, when the pulse duration is in the range described above, and when the repetition frequency is in a range of 10 to 50 kHz, the average power is controlled to be 250 mW or lower.

The light source section 10 meeting such specifications may be configured to include a passively Q-switched Nd:YAG solid laser (PLUSELAS P-1064-300 manufactured by ALPHALAS Gmbh) provided with an SHG unit using the KTP crystal for second harmonic generation use, for example. If this is the configuration, light to be emitted is with the wavelength of 532 nm, the average power of 100 mW, the pulse duration of 600 ps, and the repetition frequency of 30 kHz, for example.

Alternatively, the light source section 10 may be provided with a half-wave plate 12 between the laser 11 and the polarized beam splitter 13. The half-wave plate 12 is a polarizing element that rotates the polarization plane of the light coming from the laser 11. When the optical axis of the half-wave plate 12 is rotated by θ, the polarization plane of the laser light is rotated by 2θ after the passage therethrough. As a result, the light coming from the laser 11 is split into vertically polarized light and horizontally polarized light. Therefore, in the polarized beam splitter 13, the light is appropriately split into excitation pulse light 4, and a pump beam/probe beam (hereinafter, simply referred to as pump beam) 3.

[Pump/Probe Beam Generation Section 20]

The pump/probe beam generation section 20 is provided with an optical length adjustment mechanism for irradiation of the pulse light (the pump beam 3) coming from the light source section 10 at the same time with a Stokes beam 5 that will be described later. To be specific, the optical length of the pump beam 3 is adjusted through reflection thereof by a plurality of mirrors 22a to 22d, 23a, 23b, 24, 25a, and 25b, thereby adjusting the timing with the Stokes beam 5.

Herein, the optical length adjustment mechanism is not restricted to the configuration of Fig. 1, and the mirrors 24, 25a, and 25b are not necessarily provided if the pump beam 3 is allowed to have the optical length same as that of the Stokes beam 5 by optically arranging the mirrors 22a to 22d, 23a, and 23b.

When a single-mode fiber 32 in use is a polarization maintaining single-mode fiber that will be described later, a half-wave plate 21 is provided in front of the first mirror 22a to orient the polarization plane of the pump beam 3 to coincide with the orientation of the polarization plane of the Stokes beam 5. Note that when any ordinary single-mode fiber is in use, such a half-wave plate 21 is not necessary.

[Stokes Beam Generation Section 30]

The Stokes beam generation section 30 is for generating the Stokes beam 5 being continuous white light from the pulse light 4 coming from the light source section 10. The Stokes beam generation section 30 is provided at least with the single-mode fiber 32. Herein, the range of wavelengths of the Stokes beam 5 includes the wavelength of a Stokes beam corresponding to the molecular fingerprint region (Raman shift of 300 to 3600 cm$^{-1}$), and is expressed by Expression 1 below. In Expression 1, $\lambda$ denotes the wavelength (nm) of the Stokes beam, and $\lambda\rho$ denotes the wavelength (nm) of the pump beam. The relationship between a wave number $\omega$ (cm$^{-1}$) and the wavelength $\lambda$ (nm) is expressed by Expression 2 below.

[Expression 1]

$$\frac{1 \times 10^7}{\dfrac{1 \times 10^7}{\lambda_p} - 300} \leqq \lambda \leqq \frac{1 \times 10^7}{\dfrac{1 \times 10^7}{\lambda_p} - 3600}$$

[Expression 2]

$$\omega \cdot \lambda = 1 \times 10^7$$

The Stokes beam 5 generated by the Stokes beam generation section 30 has the wavelength $\lambda$ of 540 to 660 nm when the pump beam 3 has the wavelength $\lambda\rho$ of 532 nm, and has the wavelength $\lambda$ of 1100 to 1725 nm when the pump beam 3 has the wavelength $\lambda\rho$ of 1064 nm, for example.

The single-mode fiber 32 provided to the Stokes beam generation section 30 may have the length of 1 to 20 mm. When the single-mode fiber 32 is shorter in length than 1 m, the resulting continuous white light may not be even. On the other hand, the fiber longer in length than 20 m reduces the efficiency of spectrum generation as a whole, and increases light in a wavelength band that is not the measurement target.

In consideration thereof, the single-mode fiber 32 desirably has the length of 3 to 10m, and therewith, the continuous white light in any necessary wavelength band is generated with good efficiency and stability.

Further, the single-mode fiber 32 desirably has the cutoff wavelength selected to be almost the same as the wavelength of the excitation pulse light 4. When the cutoff wavelength is shorter than the wavelength of the excitation pulse light 4, the efficiency of input coupling to the fiber is reduced, thereby possibly reducing the efficiency of generating the Stokes beam 5 or the bandwidth thereof. On the other hand, when the cutoff wavelength is longer than the wavelength of the excitation pulse light 4, the Stokes beam 5 is not put in the beam mode of TEM00, and due to a mixture of higher-order mode(s), a single Gaussian beam is not obtained. Note that the single-mode fiber 32 satisfying the requirements described above and being available for use in the nonlinear Raman spectroscopic apparatus 1 in this embodiment is exemplified by 460HP or 630HP manufactured by Nufern, Inc., for example.

Still further, the single-mode fiber 32 in use is desirably a polarization maintaining single-mode fiber having the characteristics described above. If this is the case, the linearly-polarized Stokes beam 5 is obtained, thereby allowing matching of the polarization plane to the pump beam 3 that is usually used as the linearly-polarized light. This accordingly enables enhancement of the CARS signal to be about twice. Note that the polarization maintaining single-mode fiber available for use in the nonlinear Raman spectroscopic apparatus 1 in this embodiment is exemplified by PM-460-HP or PM-630-HP manufactured by Nufern, Inc., or HB8600 manufactured by FIBERCORE, Ltd., for example.

Herein, when the excitation pulse light 4 is directed to the single-mode fiber 32, the use of an objective lens with the numerical aperture NA in a range of 0.1 to 0.25 is desirable for a matching of the aperture coefficient to the light-receiving NA of the fiber. On the other hand, an objective lens with the numerical aperture NA in a range of 0.2 to 0.6 is desirably provided on the emission side of the single-mode fiber 32 for matching of the beam diameter of the Stokes beam 5 to that of the pump beam 3.

When the single-mode fiber 32 in use is the polarization maintaining single-mode fiber, a half-wave plate 31 is provided to orient the polarization plane of the excitation pulse light 4 to coincide with the optical axis (fast axis or slow axis) of the polarization maintaining single-mode fiber. Note that, when any ordinary single-mode fiber is in use, such a half-wave plate 31 is not necessary.

Moreover, in this Stokes beam generation section 30, a long-pass filter 33 is provided on the emission surface side of the single-mode fiber 32. The long-pass filter 33 is for reflecting the short-wavelength-side part of the white light generated by the single-mode fiber 32, and for passing therethrough only the long-wavelength-side part thereof. This allows any part in the unwanted wavelength range to be eliminated from the generated Stokes beam 5. The high-performance long-pass filter available on the market has a selection ratio of the optical density of 6 to 7, and the long-pass filter available for use in the nonlinear Raman spectroscopic apparatus 1 in this embodiment includes LP03-532RU-25 manufactured by Semrock, Inc., for example.

Moreover, the Stokes beam generation section 30 may be provided with a mirror 34 for changing the optical path of the Stokes beam 5 to direct the beam to the light irradiation section 40.

[Light Irradiation Section 40]

The light irradiation section 40 is for multiplexing the pump beam 3 from the pump/probe beam generation section 20 with the Stokes beam 5 from the Stokes beam generation section 30 to be coaxial with each other, and irradiating the sample 2 with the resulting beam. The configuration of this light irradiation section 40 is not specifically restrictive, but exemplarily includes a notch filter 41, beam expanders 42 and 43, a mirror 44, and an objective lens 45.

The beam expanders 42 and 43 are each for adjusting the beam diameter to match the incident pupil diameter of the objective lens 45. When the beam diameter is about 2 mm, for example, using a 3X beam expander to pass the beam therethrough increases the beam diameter to be about 6 mm at the time of entering the objective lens 45. The notch filter 41 for use is exemplified by NF-532U-25 manufactured by Semrock, Inc.

[Measurement section 50]

The measurement section 50 is for measuring the CARS light emitted from the sample 2, and is configured to include an objective lens 51, a short-pass filter 52, a spectroscope 53, and others. The short-pass filter 52 is for allowing only the CARS light to pass therethrough while blocking the pump beam 3 and the Stokes beam 5. The measurement section 50 also efficiently blocks any fluorescent beam generated in the sample similarly to the pump beam 3 and the Stokes beam 5 because the wavelength of the fluorescent beam is longer than that of the pump beam 3.

The high-performance short-pass filter available on the market has a selection ratio of the optical density of 6 to 7, and the short-pass filter for use in the nonlinear Raman spectroscopic apparatus 1 in this embodiment includes SP01-532RU-25 manufactured by Semrock, Inc., for example.

The spectroscope 53 for use is a CCD (Charge Coupled Device Image Sensor) provided with a cooling function for reducing any thermal noise, a polychromator mounted with a CMOS (Complementary Metal Oxide Semiconductor) array detector, a monochromator, or a PMT (Photomultiplier Tube), for example. The polychromator for use is exemplified by SR-303i manufactured by SHAMROCK, Inc., and if this is the case, a diffraction grating of 1200 lines/mm is used. Moreover, the CCD detector for use may be NEWTON DU970N BV manufactured by ANDOR Technology, for example.

The CARS light is weak, and thus is desirably protected from any loss as much as possible. The measurement section 50 is desirably configured to sufficiently block the outside light therearound. The spectroscope 53 is formed with a slit for incidence of light, and the CARS light may be directed thereto using a lens system or a multimode optical fiber 54 as shown in Fig. 1.

[Operation of Nonlinear Raman Spectroscopic Apparatus 1]

Described next is the operation of the nonlinear Raman spectroscopic apparatus 1 in the first embodiment, i.e., how to measure the CARS spectrum of the sample 2 using the nonlinear Raman spectroscopic apparatus 1. In the nonlinear Raman spectroscopic apparatus 1 of the first embodiment, first of all, in the light source section 10, pulse light coming from the laser 11 is split into two by the polarized beam splitter 13, and the resulting two beams are directed to the pump/probe beam generation section 20 and the Stokes beam generation section 30, respectively.

Alternatively, before the pulse light from the laser 11 being split by the polarized beam splitter 13, the polarization plane thereof may be rotated by the half-wave plate 12. This allows adjustment of the distribution ratio thereof.

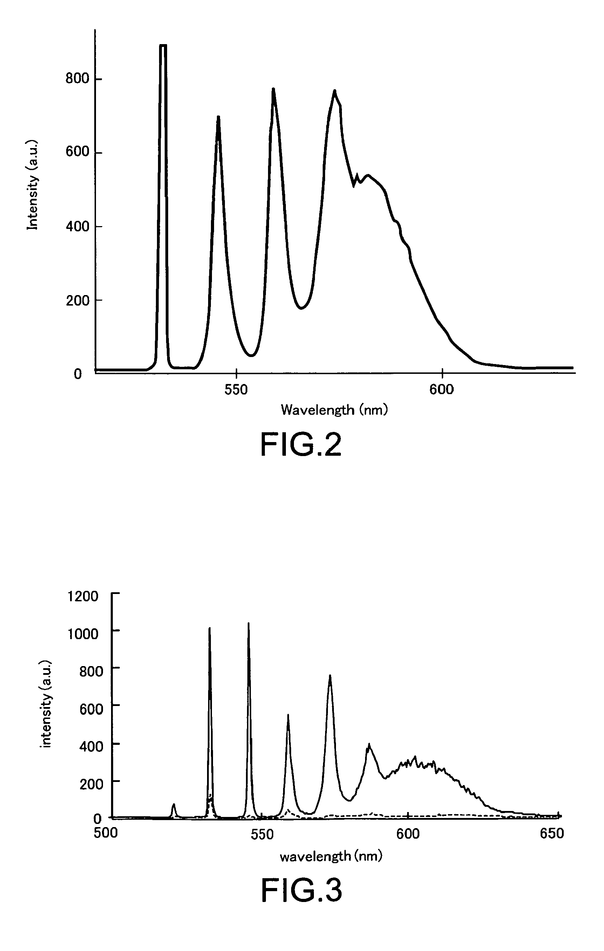

The pulse light 4 that has entered the Stokes beam generation section 30 then enters the single-mode fiber 32, and is converted into the Stokes beam 5 being continuous white light. Fig. 2 is a plot of the spectrum of a Stokes beam generated using a single-mode fiber with the length of 6 m, and in the plot, the horizontal axis indicates the wavelength and the vertical axis indicates the intensity. The spectrum of Fig. 2 is that of the continuous white light generated from the pulse light 4 with the wavelength of 532 nm, and with the incident power of 40 mw.

Herein, when the single-mode filer 32 in use is the polarization maintaining single-mode fiber, the pulse light 4 provided by the light source section 10 is directed into the single-mode fiber 32 via the half-wave plate 31. To be specific, by using the half-wave plate 31, the polarization plane of the pulse light 4 is rotated to be parallel to the fast or slow axis of the single-mode fiber 32. This accordingly ensures the polarization maintainability in the polarization maintaining single-mode fiber.

Fig. 3 is a plot showing the wavelength distribution of light emitted from a polarization maintaining single-mode fiber when the polarization plane of incoming excitation light is oriented to coincide with the fast or slow axis of the single-mode fiber, and in the plot, the horizontal axis indicates the wavelength and the vertical axis indicates the intensity. As shown in Fig. 3, when the intensity distribution in the spectrum of emitted light is measured after the orientation of an analyzer is adjusted to coincide with the fast or slow axis, the extinction occurs in almost every wavelength, thereby generating the Stokes beam 5 having the characteristics of single linear polarization. Note here that the plotted lines in Fig. 3 are not determined which indicates which axis, i.e., the fast or slow axis.

Before entering the light irradiation section 40, the Stokes beam 5 emitted from the single-mode fiber 32 passes through the long-pass filter 33, thereby eliminating any short-wavelength-side component thereof. To be specific, when the excitation pulse light 4 has the wavelength of 532 nm, eliminated is any component thereof shorter in wavelength than 540 nm to include also the excitation pulse light 4. This accordingly blocks any unwanted short-wavelength-side component in light coming from the single-mode fiber 32, thereby improving the signal-to-noise (background) ratio of the CARS spectrum being a measurement target.

On the other hand, the pulse light (the pump beam 3) entered the pump/probe beam generation section 20 is adjusted in optical length to enter the light irradiation section 40 at the same time with the Stokes beam 5. The optical-length adjustment is performed using a plurality of mirrors 22a to 22d, 23a, 23b, 24, 25a, and 25b. At this time, the half-wave plate 21 is used to orient the polarization plane of the pump beam 3 to coincide with the orientation of the polarization plane of the Stokes beam 5. In this manner, the third-order nonlinear optical process is used with a high efficiency, and the signal-to-noise (background) ratio of the CARS spectrum is improved.

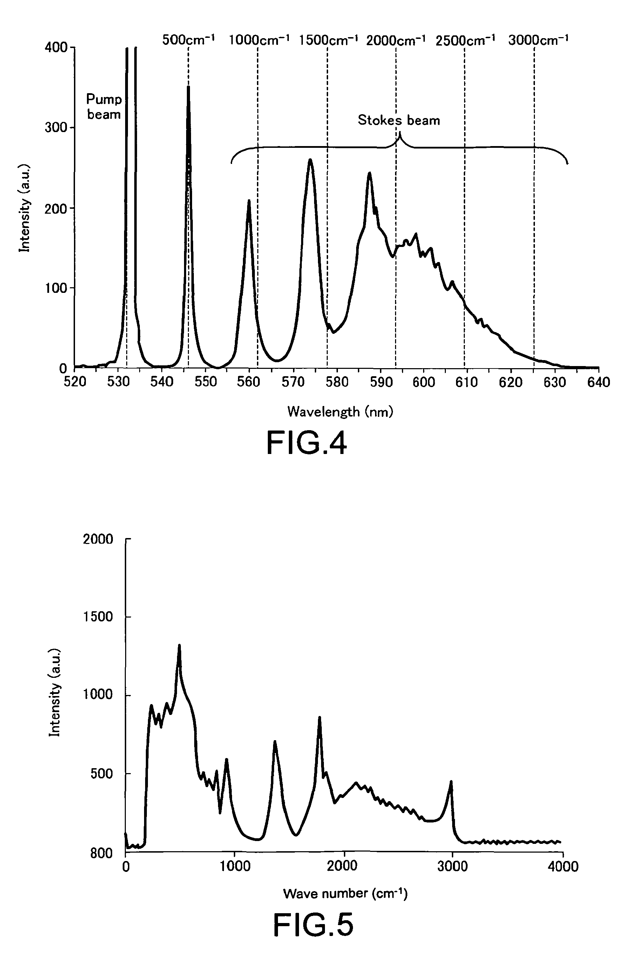

As to the pump beam 3 and the Stokes beam 5 that has entered the light irradiation section 40, the pump beam 3 is reflected by the notch filter 41, and the Stokes beam 5 passes therethrough. As an alternative to the notch filter 41, a long-pass filter is also used. In the beam expanders 42 and 43, the pump beam 3 and the Stokes beam 5 are then both increased in beam diameter to match the incident pupil diameter of the objective lens 45, and then are applied to the sample 2 via the objective lens 45. Fig. 4 is a plot of the spectrum of a Stokes beam and that of a pump beam generated using a single-mode fiber with the length of 6 m, and in the plot, the horizontal axis indicates the wavelength and the vertical axis indicates the intensity.

In the measurement section 50, the CARS light emitted from the sample 2 is detected, and a Raman spectrum is obtained. To be specific, after gathering the CARS light from the sample 2 using the objective lens 51, any unwanted light such as the pump beam 3 and the Stokes beam 5 is blocked by the short-pass filter 52, and then the resulting light is detected by the spectroscope 53.

Fig. 5 is a plot of the CARS spectrum of a plate made of polymethyl methacrylate with the thickness of 2 mm, and in the plot, the horizontal axis indicates the wave number and the vertical axis indicates the intensity. Note that the spectrum of Fig. 5 is measured using the objective lens 45 with NA of 0.45, the objective lens 51 with NA of 0.3, the laser 11 with the wavelength of 532 nm, the repetition frequency of 30 kHz, and the pulse duration of about 600 ps. Moreover, the incident average power of the pump beam 3 emitted from the objective lens 45 is 4 mW and the average power of the Stokes beam 5 is 6 mW, and the exposure time of the CCD detector is 500 ms.

As shown in Fig. 5, with the nonlinear Raman spectroscopic apparatus 1 of the first embodiment, obtained is the good CARS spectroscopic spectrum in a wide range that covers the molecular fingerprint region of 500 to 3000 cm$^{-1}$. Also with the nonlinear Raman spectroscopic apparatus 1 of this embodiment, there is no more need for the adjustment operation such as time delay so that the spectrum in this band is obtained as a whole. As described in detail above, the nonlinear Raman spectroscopic apparatus 1 of this embodiment is simplified in configuration because the Stokes beam 5 is generated using the single-mode fiber 32. The resulting apparatus is thus reduced in size and cost. Moreover, the single-mode fiber 32 is available for coupling and alignment without difficulty because the output thereof is a Gaussian beam, and the light-incident end surface(s) thereof is resistant to damage so that the resulting Stokes beam 5 has a high stability.

Herein, using the ordinary SFM to a source of continuous white light in cascade-induced Raman scattering is the previously known application, but using that in the nonlinear Raman spectroscopy is not yet reported. This seems to be because the cascade-induced Raman scattering using the SMF generates a plurality of peaks of light.

With the nonlinear spectrometer system described in Patent Document 5, there is no specific description about the polarization state of supercontinuum light (broadband light). However, for the effective use of the coherent third-order nonlinear optical process, an important factor is the linear polarization of all the beams, i.e., the pump beam, the probe beam, and the Stokes beam (the broadband beam). On the other hand, with the nonlinear Raman spectroscopic apparatus 1 of the first embodiment, the third-order nonlinear optical process is utilized with a good efficiency because the polarization plane of the pump beam 3 is oriented to coincide with the orientation of the polarization plane of the Stokes beam 5.

With the apparatus using a polarization maintaining single-mode fiber, a beam adjustment of the pump beam and the Stokes beam is performed with particular ease, i.e., beam diameter equalization and directional alignment of beams. The apparatus is thus suitable for microspectroscopy and imaging.

[2. Second Embodiment]

[Entire Configuration of Apparatus]

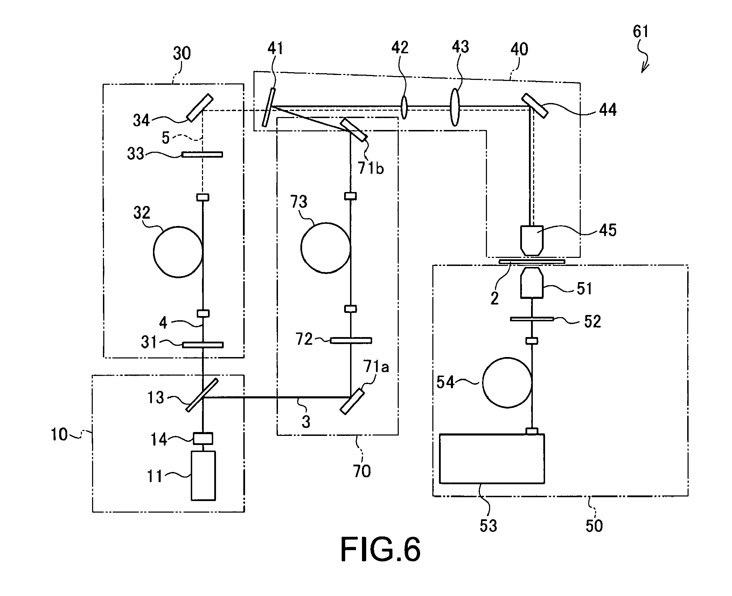

Described next is a nonlinear Raman spectroscopic apparatus according to a second embodiment of the present disclosure. Fig. 6 is a diagram schematically showing the configuration of the nonlinear Raman spectroscopic apparatus of a second embodiment of the present disclosure. In Fig. 6, any component similar to that of the nonlinear Raman spectroscopic apparatus 1 in the first embodiment of Fig. 1 is provided with the same reference numeral, and is not described in detail again.

As shown in Fig. 6, in the nonlinear Raman spectroscopic apparatus 61 in this embodiment, the optical length adjustment mechanism of a pump/probe beam generation section 70 is configured not to reflect a beam by a mirror(s) but to pass the beam through an optical fiber 73 with a predetermined length. To be specific, pulse light coming from the light source section 10 is changed in optical path by a mirror 71a, and then enters the optical fiber 73. The pulse light is then adjusted in optical length by passing through the optical fiber 73, and is changed in optical path again this time by a mirror 71b. The resulting pulse light is then emitted to the light irradiation section 40.

[Pump/Probe Beam Generation Section 70]

The optical fiber 73 for use in the pump/probe beam generation section 70 includes a single-mode fiber or a polarization maintaining single-mode fiber when an input thereto is a low-excitation power of several nW or lower, for example. The reason is that the optical fiber is used simply for light transmission because the low excitation power generates no cascade-induced Raman scattered light in the fiber. The single-mode fiber available for use in such a case is exemplified by 630HP manufactured by Nufern, Inc., and the polarization maintaining fiber is exemplified by PM-460-HP manufactured by Nufern, Inc., or HB8600 manufactured by FIBERCORE, Ltd.

On the other hand, a gradual increase of the excitation power generates the induced Raman scattered light, and this results in a transmission failure of pump/probe pulses with a single wavelength. In the experiment carried out by the inventor of the present disclosure, the threshold at which the induced Raman scattering does not occur is with an input of excitation power up to about 5 mW. Therefore, with an input of the excitation power of several mW or higher, the diameter of the fiber is increased as appropriate, and the use of the following fibers is desirable, e.g., a polarization maintaining single-mode fiber with the fiber core diameter of 8 $\mu$m or larger, a multi-mode fiber with the core diameter of 100 $\mu$m or smaller, or a so-called large-mode area fiber, a large-mode area photonic crystal fiber, or others.

As a single-mode fiber for use, an option includes SMF-28-J9 manufactured by Nufern, Inc., and as a polarization maintaining single-mode fiber for use, an option includes PM1550-HP manufactured by Nufern, Inc., for example. As a large-mode area fiber for use, an option includes P-10/125DC, P-25/240DC, or P-40/140DC manufactured by THORLABS, Inc., for example. As a large-mode area photonic crystal fiber for use, an option includes LMA-20 manufactured by NKT PHOTONICS A/S, for example. As an endless single mode photonic crystal fiber, an option includes ESM-12-01 manufactured by NKT PHOTONICS A/S, for example.

When the single-mode fiber 32 in use is a polarization maintaining single-mode fiber, a half-wave plate 72 is provided in front of the optical fiber 73 to orient the polarization plane of the pump beam 3 to coincide with the orientation of the polarization plane of the Stokes beam 5. Note that when any ordinary single-mode fiber is in use, such a half-wave plate 72 is not necessary.

[Light Source Section 10]

In the nonlinear Raman spectroscopic apparatus 61 in this embodiment, the light source section 10 is provided therein with an optical crystal 14 for second harmonic generation use.

With the use of this second-harmonic-generation optical crystal 14, excitation light emitted from the laser 11 is subjected to wavelength conversion to be a pump beam. To be specific, when the excitation light has the wavelength of 1064 nm, the result of the wavelength conversion is green light with the wavelength of 532 nm.

With the nonlinear Raman spectroscopic apparatus 61 in this second embodiment, the optical fiber 73 is used to adjust the optical length of the pump beam 3, thereby easily adjusting the timing with the Stokes beam 5, and reducing the size of the apparatus. In the CARS spectroscopy, the pump beam 3 is expected to reach the measurement point of a sample at the same time with the Stokes beam 5, and using the optical fiber 73 easily allows the pump beam 3 to have the optical length same as that of the Stokes beam 5.

Note that the configuration and effect not described in the second embodiment above are similar to those in the first embodiment described above.

[3. Third Embodiment]

[Entire Configuration of System]

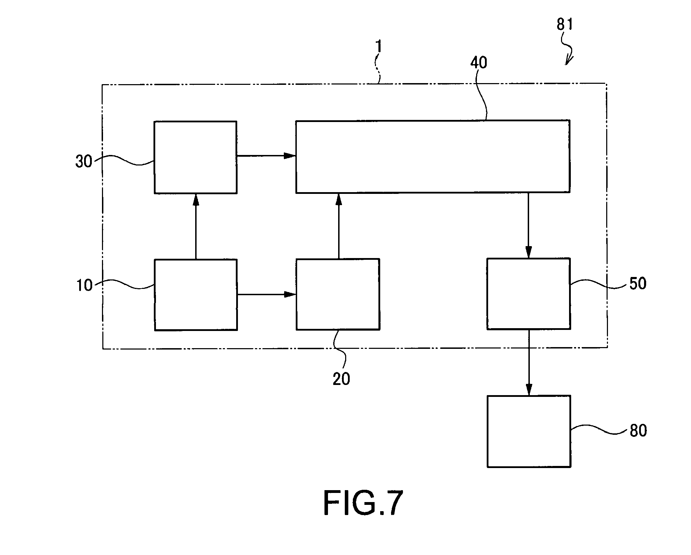

Described next is a nonlinear Raman spectroscopic system according to a third embodiment of the present disclosure. Fig. 7 is a conceptual diagram showing the configuration of a nonlinear Raman spectroscopic system of the third embodiment of the present disclosure. Note that, in Fig. 7, any component similar to that of the nonlinear Raman spectroscopic apparatus 1 in the first embodiment of Fig. 1 is provided with the same reference numeral, and is not described in detail again.

As shown in Fig. 7, the nonlinear Raman spectroscopic system 81 in this embodiment is a system provided with the nonlinear Raman spectroscopic apparatus 1 in the first embodiment described above, and therein, the measurement section 50 of the Raman spectroscopic apparatus 1 is connected with a computation section 80.

[Computation Section 80]

The computation section 80 is provided with a computer being an arithmetic unit, a display unit, and others. The computation section 80 normalizes the distribution in the CARS spectrum detected by the spectroscope in the measurement section 50, and displays the result or others. In the below, described is the specific computation processing for the normalization.

A multiplex CARS spectrum includes a degenerate four-wave mixing (2-color CARS) component, and a nondegenerate four-wave mixing (3-color CARS) component (see Young Jong Lee and Marcus T. Cicerone: "Single-shot interferometric approach to background free broadband coherent anti-Stokes Raman scattering spectroscopy", 5 January 2009 / Vol. 17, No. 1 / OPTICS EXPRESS 123).

In the CARS spectroscopy, the degenerate four-wave mixing (2-color CARS) component is often referred to as the CARS spectrum generally in a strict sense when the pump beam and the probe beam have the same wavelength but not the Stokes beam. On the other hand, in the multiplex CARS, the nondegenerate four-wave mixing (3-color CARS) component in which the pump, probe, and Stokes beams have different wavelengths may become anti-Stokes Raman scattered light, which is the same as the degenerate four-wave mixing (2-color CARS) component described above.

On the other hand, with the nonlinear Raman spectroscopic apparatus 1 used in the nonlinear Raman spectroscopic system 81 in this embodiment, the pump beam and the probe beam are regarded enough as a narrowband line spectrum compared with the Stokes beam (continuous white light). Accordingly, the degenerate four-wave mixing (2-color CARS) component $I_{2\text{-color}}(\omega)$ is proportional to the product of a square of the power $P_P$ of the pump beam and the intensity distribution $S_S(\omega)$ of the Stokes beam, and is expressed by Expression 3 below. In Expression 3 below, $\omega$ denotes a wave number ($cm^{-1}$).

[Expression 3]

$$I_{2-color}(\omega) \propto \left(\frac{P_P}{2}\right)^2 S_S(\omega)$$

Moreover, as to the nondegenerate four-wave mixing (3-color CARS) component $I_{3-color}(\omega)$, the two wavelength components (wave number components) in the spectrum of continuous broadband light respectively serve as the pump beam and the Stokes beam. Therefore, the CARS spectrum is expressed by Expression 4 below as is approximately considered to be proportional to the product of the autocorrelation function of the intensity distribution of the Stokes beam on $\omega$ and $\omega'$ and the power of the pump beam.

[Expression 4]

$$I_{3-color}(\omega) \propto P_P \int S_S(\omega') S_S(\omega + \omega') d\omega'$$

The sum of Expressions 3 and 4 above is expressed by Expression 5 below.

[Expression 5]

$$R_N(\omega) = I_{2-color} + I_{3-color} = \left(\frac{P_P}{2}\right)^2 S_S(\omega) + P_P \int S_S(\omega') S_S(\omega + \omega') d\omega'$$

When $R_N(\omega)$ found by Expression 5 above is used as a normalization factor to normalize the CARS measuring spectrum $S_C(\omega)$, the normalized CARS spectrum $S_N(\omega)$ is expressed by Expression 6 below.

[Expression 6]

$$S_N(\omega) = \frac{S_C(\omega)}{R_N(\omega)}$$

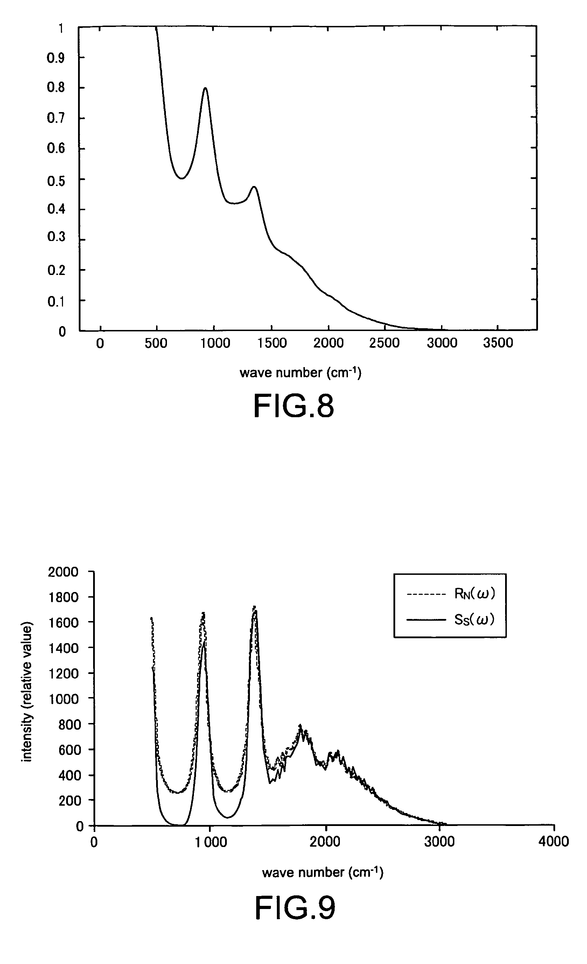

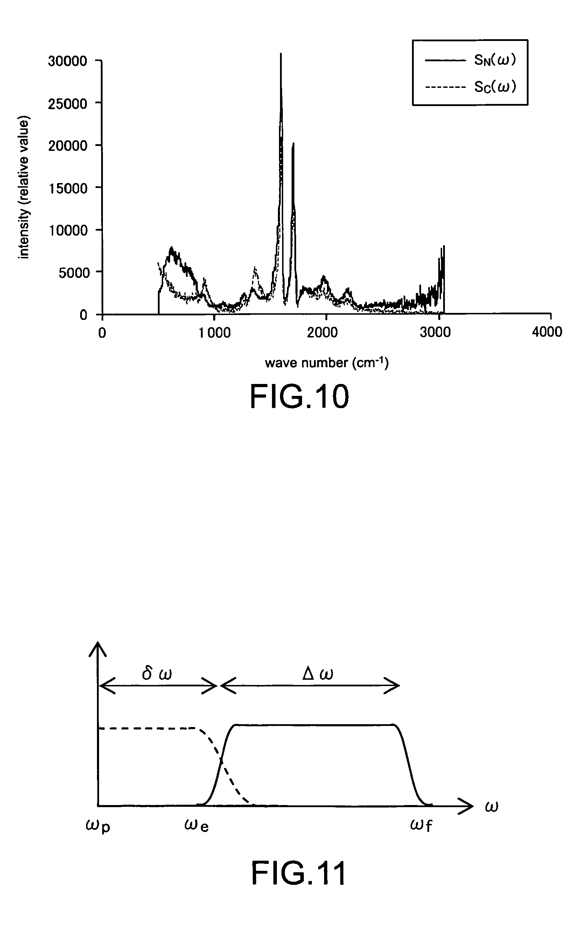

Fig. 8 is a plot of the autocorrelation function of the intensity distribution of a Stokes beam, and in the plot, the horizontal axis indicates the wave number and the vertical axis indicates the intensity. Fig. 9 is a plot showing the intensity distribution of a Stokes beam, and in the plot, the horizontal axis indicates the wave number and the vertical axis indicates the intensity. Herein, Fig. 9 shows also the normalization factor $R_N(\omega)$ of Expression 5. Fig. 10 is a plot of the CARS spectrum of a plate made of polyethylene terephthalate with the thickness of 1 mm after normalization thereof by Expression 6 above.

As shown in Figs. 8 to 10, after the normalization processing by the method in this embodiment, the spectrum noise is confirmed to be lower than before because of the disappearance of the pseudo peak appearing in the range of 500 to 1000 cm$^{-1}$. Herein, the spectra of Figs. 8 to 10 are those measured under the condition of 4 mW for the incidence average power of the pump beam 3 coming from the objective lens 45, 3 mW for the average power of the Stokes beam 5, and 300 ms for the exposure time of the CCD detector.

With the normalization processing performed in the computation section 80 as such, even when the Stokes-beam intensity distribution is not flat, the CARS spectrum intensity distribution is obtained right with no confusion with any pseudo spectrum peak not responding to the molecular vibration of the CARS spectrum being a measurement target.

In the Stokes-beam intensity distribution obtained by the nonlinear Raman spectroscopic system 81 of this third embodiment, the continuous white light is generated based on the cascade-induced Raman scattering in the single-mode fiber.

Therefore, the spectrum is not flat due to a peak that occurs in the low-wave number region (on the short-wavelength side) at every Raman shift of about 440 cm$^{-1}$ by silica core (SiO$_2$) in the single-mode fiber.

The long-pass filter eliminating any unwanted component of light emitted from the Stokes-beam-generating single-mode fiber is set to have the edge wavelength slightly longer than the wavelength of the pump beam. With such a setting, a shift occurs to the long-wavelength side where the spectrum is relatively flat. In this case, the low-wave number part of the degenerate four-wave mixing (2-color CARS) component is reduced or eliminated but the nondegenerate four-wave mixing (3-color CARS) component is left. This is because the nondegenerate four-wave mixing (3-color CARS) component contains a low-wave number component being a difference of two optical components in the Stokes-beam intensity distribution.

In consideration thereof, by setting in advance the edge wavelength of the long-pass filter provided after the emission of light from the single-mode fiber, the satisfactory CARS spectrum is to be obtained by using only a relatively-flat part of the Stokes-beam intensity distribution with no loss of the measuring wave number region. The setting condition for the edge wavelength of the long-pass filter is as below.

Assuming that the short-wavelength-side edge wavelength of a long-pass filter is $\lambda e$(nm), the wavelength of a pump beam is $\lambda_p$(nm), and the measured maximum wave number is $\omega m$(cm$^{-1}$), the condition for the edge wavelength $\lambda e$(nm) is expressed by Expression 7 below. Note that $\lambda f$ in Expression 7 below is a value found by Expression 8 below, and the relationship between the wave number $\omega$(cm$^{-1}$) and the wavelength $\lambda$(nm) is expressed by Expression 2 above. Fig. 11 is a diagram showing how to derive the conditional expression of Expression 7 below.

[Expression 7]

$$\lambda_p \leqq \lambda_e \leqq \frac{2\lambda_p \lambda_f}{\lambda_p + \lambda_f}$$

[Expression 8]

$$\lambda_f = \frac{1 \times 10^7 \cdot \lambda_p}{1 \times 10^7 - \omega_m \cdot \lambda_p}$$

With the use of a band-pass filter, the band-pass region may be $\lambda e < \lambda < \lambda f$. Herein, using the method described above, the setting of the edge wavelength of a long-pass filter is performed for the CARS spectra of Figs. 8 to 10. Assuming that $\lambda p = 532$ nm and $\omega m = 3000$ cm$^{-1}$, Expression 8 above gives $\lambda f = 633$ nm. Therefore, Expression 7 above gives the range of $\lambda e$ being $\lambda p$ (=532 nm) < $\lambda e$ < 578 nm.

Next, assuming that $\lambda e = 575$ nm, Expression 2 above gives $\Delta\omega = \{(1 \times 10^7) / \lambda e\} - \{(1 \times 10^7) / \lambda f\} = 1594$ cm$^{-1}$, and $\delta\omega = \{(1 \times 10^7) / \lambda p\} - \{(1 \times 10^7) / \lambda e\} = 1406$ cm$^{-1}$. Accordingly, if $\Delta\omega$ and $\delta\omega$ satisfy the inequality in Expression 9 below as shown in Fig. 11, it means that the CARS spectrum is obtained in every wave-number region (0 to $\omega$m).

[Expression 9]

$$\delta\omega < \Delta\omega$$

For the measurement, used is a long-pass filter having the edge wavelength of 575 nm, which is manufactured by Edmund Optics GmbH. In this case, the nondegenerate four-wave mixing (3-color CARS) component is in a range of 4 to 1406 cm$^{-1}$, and the degenerate four-wave mixing (2-color CARS) component is in a range of 1406 to 3000 cm-$^{1}$.

As such, by eliminating any non-flat Stokes beam region using a long- or band-pass filter, irrespective of the simple use of only a part of the flat Stokes-beam intensity distribution, obtained is the satisfactory CARS spectrum with no loss of the measuring wave number (wavelength) region.

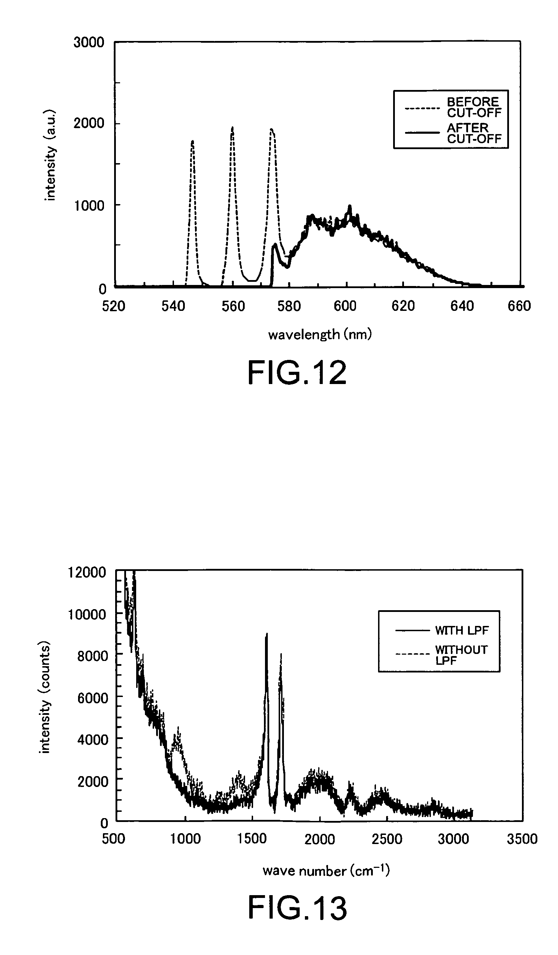

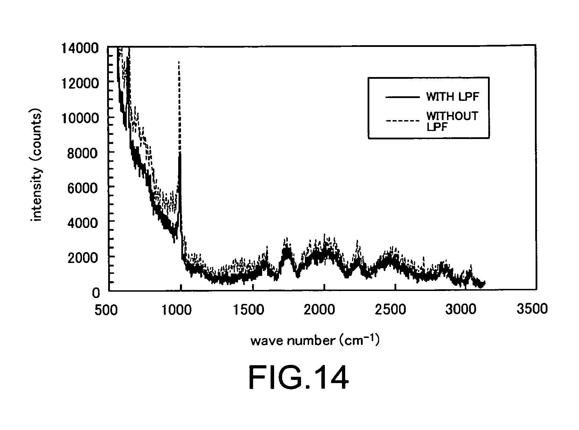

Fig. 12 is a plot showing the intensity distribution of a Stokes beam whose short-wavelength-side component is cut off by an LPF (Low-Pass Filter), and in the plot, the horizontal axis indicates the wavelength and the vertical axis indicates the intensity. Fig. 13 is a plot of the CARS spectrum of a plate made of polyethylene terephthalate with the thickness of 1 mm, which is measured based on the Stokes-beam intensity distribution in Fig. 12. Fig. 14 is a plot of the CARS spectrum of a plate made of polyethylene with the thickness of 1 mm.

As shown in Fig. 13, the CARS spectrum of the polyethylene-terephthalate plate not using a long-pass filter shows a pseudo spectrum peak in the vicinity of 900 cm$^{-1}$ and 1400 cm$^{-1}$. On the other hand, with the CARS spectrum using a long-pass filter, the result is satisfactory with no such pseudo spectrum.

Also as shown in Fig. 14, the CARS spectrum of the polyethylene plate produces the similar effect. In the spectrum of Fig. 14, the spectrum peak in the vicinity of 1000 cm$^{-1}$ is the one resulted from the nondegenerate four-wave mixing (3-color CARS).

[4. Fourth Embodiment]

[Entire Configuration of Apparatus]

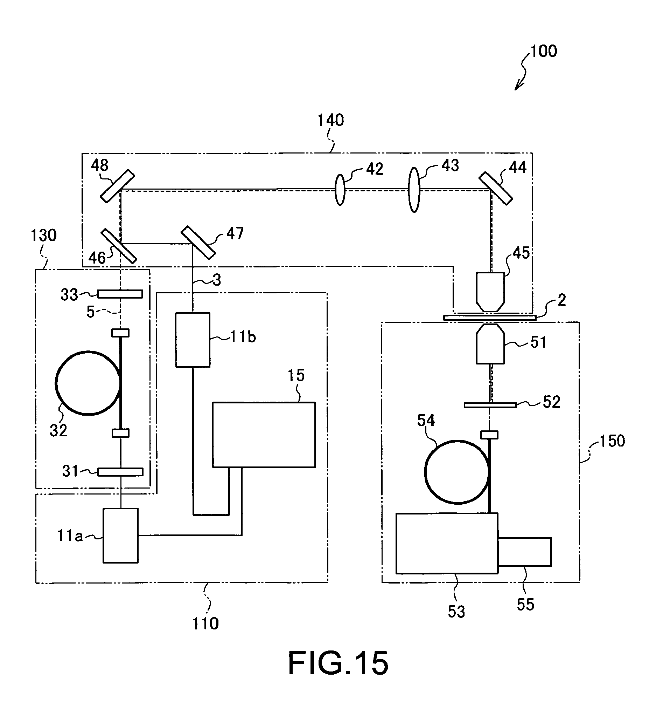

Described next is a nonlinear Raman spectroscopic apparatus according to a fourth embodiment of the present disclosure. Fig. 15 is a diagram schematically showing the configuration of the nonlinear Raman spectroscopic apparatus of the embodiment. In Fig. 15, any component similar to that of the nonlinear Raman spectroscopic apparatus 1 in the first embodiment of Fig. 1 is provided with the same reference numeral, and is not described in detail again.

As shown in Fig. 15, in the nonlinear Raman spectroscopic apparatus 100 in this embodiment, a light source section 110 is provided with two lasers 11a and 11b, and a pulse generation/delay circuit 15. The laser 11b and the pulse generation/delay circuit 15 serve as an alternative to the pump/probe beam generation section for a timing adjustment with the Stokes beam 5.

[Light Source Section 110]

The lasers 11a and 11b in the light source section 110 may be those generating short-pulse laser light, and are each exemplified by a small-sized active Q-switched short-pulse laser excitation light source. The active Q-switched short-pulse laser excitation light source including an EOM (Electro Optic Modulator) or an AOM (Acousto-Optic Modulator) in a resonator available on the market is inexpensive and small in size similarly to the passive Q-switched short-pulse laser excitation light source.

In the light sources as such, continuous laser oscillation pulse trains are controllable by any external drive circuit. The light sources are excellent in terms of time jitter (time accuracy) between the pulse trains, and are capable of controlling the time jitter to 1 ns or lower. On the other hand, the pulse generation/delay circuit 15 is for controlling the pulse trains of laser light coming from the lasers 11a and 11b, and for a time delay of the short-pulse laser light coming from the laser 11b.

The laser light coming from the lasers 11a and 11b may have the same wavelength or may not. If the laser 11b is assumed to emit pulse laser light with a wavelength longer than that from the laser 11a, by using a long- or band-pass filter, only the relatively-flat longer-wavelength part is extracted including no part of the continuous white light spectrum showing a sharp induced Raman scattered peak(s). To be specific, with a shift of 10 nm toward the long-wavelength side, the Raman shift of several hundreds to 3600 cm$^{-1}$ is to be obtained.

Moreover, as to the active Q-switched short-pulse laser excitation light source (the laser 11b) for the pump/probe beam use, the output thereof may be one digit or so smaller than that of the light source for Stokes-beam excitation use (the laser 11a).

In the nonlinear Raman spectroscopic apparatus 100 of this embodiment, the laser light source for use as the lasers 11a and 11b includes an Nd:YAG laser with the wavelength of 1064 nm, 1319 nm, 1122 nm, or 946 nm, an Nd:YVO$_4$ laser with the wavelength of 1064 nm, 1342 nm, or 914 nm, an Nd:YLF laser with the wavelength of 1053 nm or 1047 nm, or a Yb:YAG laser with the wavelength of 1030 nm, for example.

With the second harmonic generation using the above-described wavelengths as fundamental wavelengths, the resulting SHG light has a wavelength 457 nm, 473 nm, 515 nm, 523 nm, 527 nm, 532 nm, 561 nm, 660 nm, or 671 nm. The Q-switched lasers described above are surely not restrictive, and a short-pulse mode-locked laser of Nd:YAG, Nd:YVO$_4$ or Nd:YLF, or a Yb-doped fiber short-pulse laser, and the second harmonic thereof are also possible for use.

The induced Raman scattered peak wavelength appears at intervals because of Raman scattering of silica, which is the main component of the fiber core of the single-mode fiber 32 provided to the Stokes beam generation section 13 that will be described later. Herein, because the Raman shift of silica is 440 cm$^{-1}$, the interval of the induced Raman scattered peak wavelength is equal to the interval of the wavelength corresponding thereto, and is about 11 to 16 nm with the wavelength of 500 to 600 nm.

To be specific, in order to obtain the wave number region of 200 to 3600 cm$^{-1}$, assuming that the laser light source for the pump/probe beam (the laser 11b) in use is a Yb:YAG laser emitting SHG light with the wavelength of 561 nm, the continuous white light spectrum of 567 to 703 nm may be used for the Stokes beam 5. That is, for use as the fiber excitation light source for Stokes beam generation use (the laser 11a), the Nd:YAG laser emitting SHG light with the wavelength of 532 nm may be used.

These lasers 11a and 11b have the pulse duration of 0.01 to 10 ns, and the pulse peak power of 100 W to 10 kW. In the lasers 11a and 11b, the pulse duration is expected to be equivalent to or more than the time jitter, and the selected pulse duration is about 1 ns.

[Stokes Beam Generation Section 130]

Similarly to the nonlinear Raman spectroscopic apparatuses in the first to third embodiments described above, the nonlinear Raman spectroscopic apparatus 100 in this fourth embodiment generates continuous white light (supercontinuum) being the Stokes beam 5 using the single-mode fiber 32, desirably using a polarization maintaining single-mode fiber. The single-mode fiber 32 desirably has the length of 2 to 20 m, and more desirably, has the length of 6 to 15 m.

[Operation]

Described next is the operation of the nonlinear Raman spectroscopic apparatus 100 in the fourth embodiment, i.e., how to measure the CARS spectrum of the sample 2 using the nonlinear Raman spectroscopic apparatus 100. In the nonlinear Raman spectroscopic apparatus 100 of this embodiment, in the light source section 10, the laser 11a generates short-pulse laser light for Stokes beam generation use, and the laser 11b generates short-pulse laser light being the pump/probe beam 3.

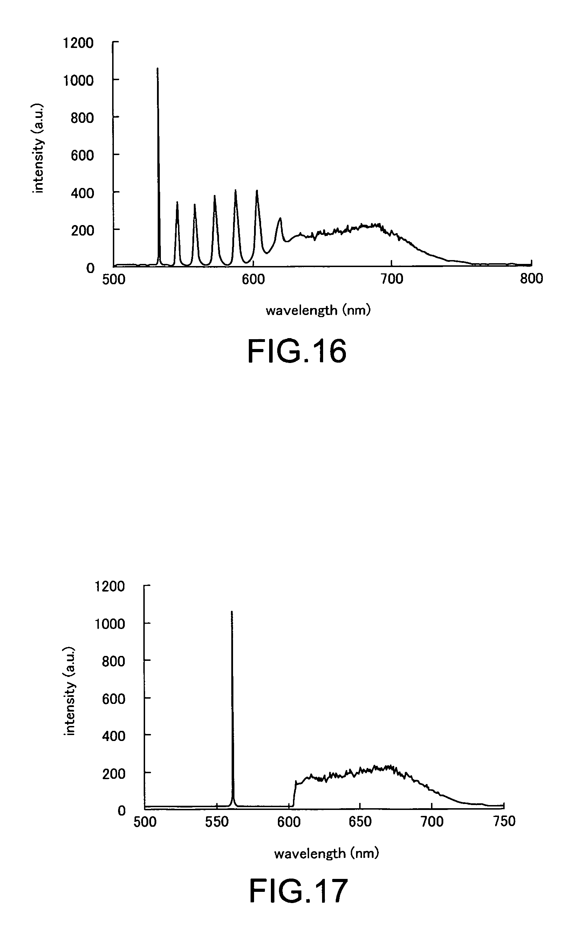

The short-pulse laser light emitted from the laser 11a enters the Stokes beam generation section 130, and then is converted into the Stokes beam 5 being the continuous white light by the single-mode fiber 32. Fig. 16 is a plot showing the intensity distribution of a Stokes beam when a polarization maintaining single-mode fiber with the length of 12 m is in use and when the average excitation power is 50 mW, and in the plot, the horizontal axis indicates the wavelength and the vertical axis indicates the intensity. As shown in Fig. 16, the Stokes-beam intensity distribution is flat with the wavelength of 100 nm or more on the long-wavelength side.

On the other hand, the short-pulse laser light (the pump/probe beam 3) emitted from the laser 11a enters directly a light irradiation section 140. At this time, the pulse generation/delay circuit 15 adjusts the timing for the pump/probe beam 3 to enter the light irradiation section 140 at the same time with the Stokes beam 5.

As an example, the time taken for the short-pulse laser light from the laser 11a to go inside of the single-mode fiber 32 is T = L/c = 29 to 73 ns with the effective refractive index of the fiber core being 1.46, and the timing adjustment thereof is easy by a time delay electronic circuit. As such, the Stokes beam 5 is delayed by several tens of ns than the pump/probe beam 3 only by Q-switching of, later by the delay, the active Q-switched short-pulse laser excitation light source (the laser 11b) specifically designed for the pump-probe beam 3. This uses no multi-mode fiber and no space for spatial transmission.

The Stokes beam 5 and the pump/probe beam 3 that has entered the light irradiation section 140 are changed in optical path by a dichroic mirror 46 and mirrors 47 and 48. The pump/probe beam 3 and the Stokes beam 5 after multiplexing are then increased in beam diameter in the beam expanders 42 and 43 to match the incident pupil diameter of the objective lens 45, and the sample 2 is irradiated with the beams via the objective lens 45. Fig. 17 is a plot showing the intensity distribution of the Stokes beam 5 after the passages through the spectrum of the pump/probe beam 3 with the wavelength of 561 nm and a long-pass filter with the edge wavelength of 605 nm, and in the plot, the horizontal axis indicates the wavelength and the vertical axis indicates the intensity.

In a measurement section 150, the CARS light emitted from the sample 2 is detected, and a Raman spectrum is obtained. To be specific, after gathering the CARS light from the sample 2 using the objective lens 51, any unwanted light is blocked by the short-pass filter 52, and then the resulting light is directed to the spectroscope 53 provided with a detector 55 such as CCD via the multi-mode optical fiber 54, for example.

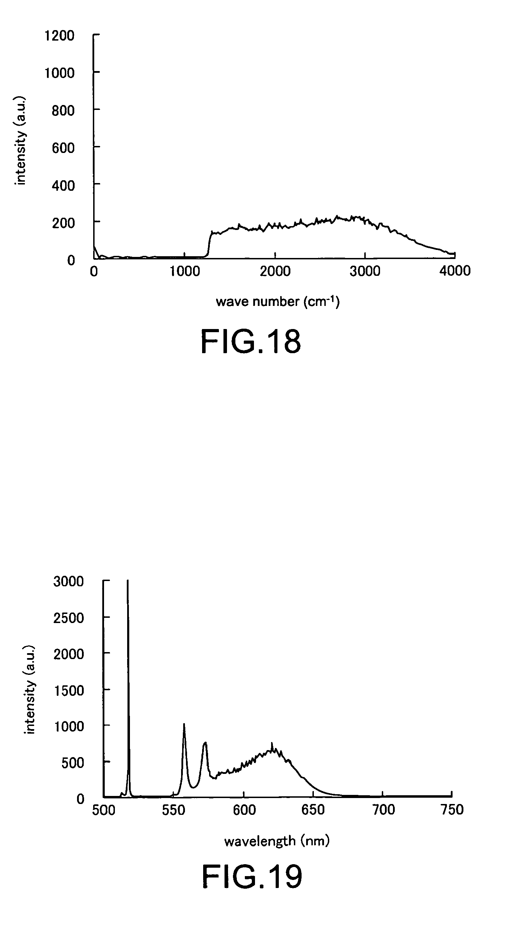

Fig. 18 is a plot showing the intensity distribution of the Stokes beam of Fig. 17, and in the plot, the horizontal axis indicates the wave number and the vertical axis indicates the intensity. As shown in Fig. 18, with the use of the pump/probe beam 3 and the Stokes beam 5 of Fig. 17, the measurable range is a wide range of 1200 to 3600 cm$^{-1}$ by taking into account the CARS spectroscopy with the degenerate four-wave mixing process, and the CARS measurement is made using the Stokes-beam spectrum being flat in the wide range as such.

Moreover, if the nondegenerate four-wave mixing process described above is also taken into account, the measurement is possibly made in a range from the low-wave number region to 1200 cm$^{-1}$. In other words, the measurement is possibly made in a range from several hundreds to 3600 cm$^{-1}$.

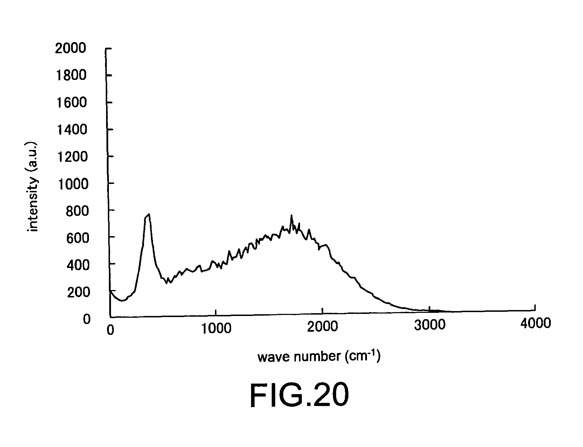

Fig. 19 is a plot showing the intensity distribution of a Stokes beam when a polarization maintaining single-mode fiber with the length of 6 m is in use and when the average excitation power is 50 mW, and in the plot, the horizontal axis indicates the wave number and the vertical axis indicates the intensity. Fig. 20 is a plot showing the intensity distribution of the Stokes beam of FIG. 19 using a Raman shift expressed in wave number with reference to the wavelength of 561 nm of a pump/probe beam, and in the plot, the horizontal axis indicates the wave number and the vertical axis indicates the intensity. By changing the wavelength of the excitation laser light source for Stokes beam generation use, and by changing the wavelength of the light source for the pump/probe beam (by a shift to the long-wavelength side), as shown in Fig. 20, the use of the Stokes beam 5 of Fig. 19 allows the CARS spectroscopy in a range of 500 to 3000 cm$^{-1}$.

As described in detail above, the nonlinear Raman spectroscopic apparatus in this embodiment uses two lasers, and the pulse generation/delay circuit applies electronic-circuit control over the timing of pulse generation between the two lasers. As such, the pulse-timing adjustment is made by the electronic-circuit control with no need for the optical arrangement to be appropriate or for a multi-mode fiber, for example. What is more, with the use of two short-pulse laser light sources varying in wavelength, i.e., one with a shorter wavelength is for Stokes-beam excitation, and the other with a longer wavelength is for pump/probe beam, any molecular vibration spectrum is measured over a wide range with no loss of a low-wave number region using only a part of the flat Stokes-beam intensity distribution.

Accordingly, the resulting nonlinear Raman spectroscopic apparatus is reduced in size and implements the measurement stability with no more annoyance of the optical-length adjustment. Note that the configuration and effect of the nonlinear Raman spectroscopic apparatus not described in the fourth embodiment above are similar to those in the first embodiment described above.

[5. Modification of Fourth Embodiment]

[Entire Configuration of Apparatus]

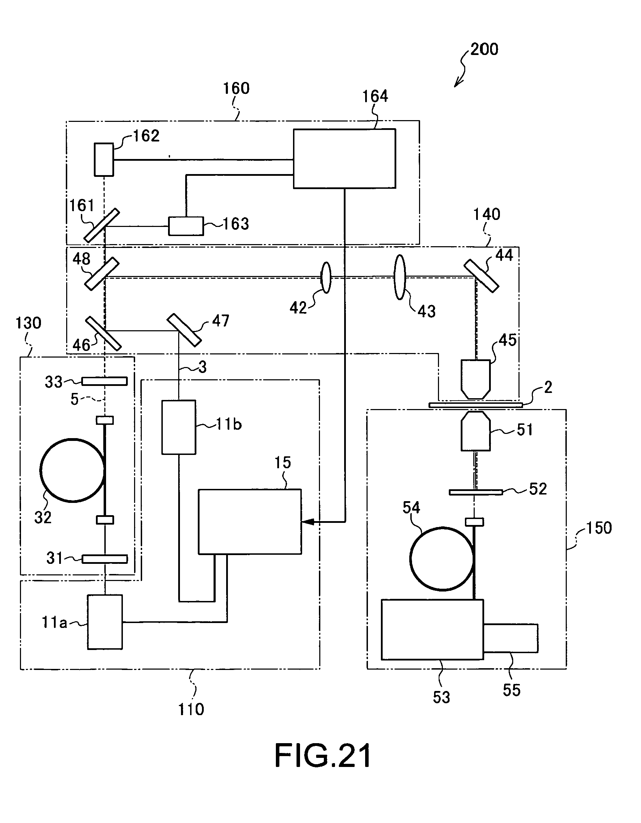

Described next is a nonlinear Raman spectroscopic apparatus in a modification according to the fourth embodiment of the present disclosure. Fig. 21 is a diagram schematically showing the configuration of a nonlinear Raman spectroscopic apparatus in this modification. In Fig. 21, any component similar to that of the nonlinear Raman spectroscopic apparatus 100 in the fourth embodiment of Fig. 15 is provided with the same reference numeral, and is not described in detail again.

As shown in Fig. 21, the nonlinear Raman spectroscopic apparatus 200 in this modification is provided with a time-difference measurement section 160 for measuring a time difference between the Stokes beam 5 and the pump/probe beam 3 entering the light irradiation section 140.

[Time-Difference Measurement Section 160]

The time-difference measurement section 160 is provided with a color separation filter 161, detectors 162 and 163, a digital oscilloscope 164, and others. In the light irradiation section 140, after multiplexing of the pump/probe beam 3 and the Stokes beam 5, the resulting beam is separated again by the color separation filter 161, and a time difference therebetween is detected with a high accuracy using the high-speed photodiode detectors 162 and 163 provided with a distance therebetween, for example. The detection result is fed back to the time delay circuit in the pulse generation/delay circuit 15.

With the nonlinear Raman spectroscopic apparatus 200 in this modification, the time-difference measurement section 160 measures a time difference between the Stokes beam 5 and the pump/probe beam 3, and the measured time difference is fed back to the pulse generation/delay circuit 15. Accordingly, the timing accuracy between the Stokes beam 5 and the pump/probe beam 3 is improved to a greater extent. Herein, the configuration and effect of the nonlinear Raman spectroscopic apparatus not described in the modification above are similar to those in the fourth embodiment described above.

[6. Fifth Embodiment]

[Entire Configuration of Apparatus]

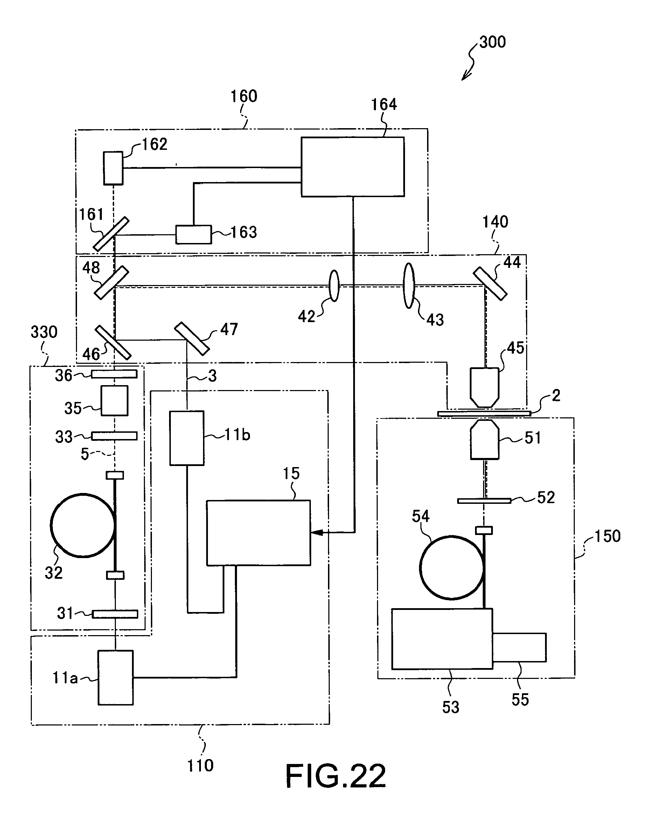

Described next is a nonlinear Raman spectroscopic apparatus according to a fifth embodiment of the present disclosure. Fig. 22 is a diagram schematically showing the configuration of a nonlinear Raman spectroscopic apparatus of the embodiment. In Fig. 22, any component similar to that of the nonlinear Raman spectroscopic apparatus 200 in the modification of the fourth embodiment of Fig. 21 is provided with the same reference numeral, and is not described in detail again.

The nonlinear Raman spectroscopic apparatus 300 in this embodiment includes, in the stage subsequent to the long-pass filter 33 of a Stokes beam generation section 330, an Acousto-Optic Tunable Filter (AOTF) 35 and an analyzer 36. Herein, the analyzer 36 may be a polarization beam splitter (PBS). With such a configuration, any influence of a peak of 200 to 500 $cm^{-1}$ to the CARS spectrum is to be eliminated.

[Operation]

With the nonlinear Raman spectroscopic apparatus 300 in this embodiment, by using the AOTF 35, the electronic-circuit control (wavelength sweep) is so performed as to allocate frequency modulation of the driver to the wavelength component by the length of time inversely proportional to the peak intensity. In this manner, the wavelength component in any region not flat in the Stokes-beam intensity distribution is adjusted in terms of sample irradiation time, thereby making uniform the average intensity in the light accumulation time of the CCD detector 55. This accordingly leads to the Stokes-beam intensity distribution being effectively flat.

Alternatively, the wavelength selection time or the ultrasound intensity of the AOTF may be modulated in accordance with the Stokes-beam intensity distribution. If the ultrasound intensity of the AOTF 35 is modulated in accordance with the Stokes-beam intensity distribution by a drive amplifier circuit provided for modulating the ultrasound intensity of the AOTF 35, the Stokes-beam intensity distribution is made flat after the passage of the AOTF 35.

Herein, because the access time of the AOTF 35 to the designated wavelength is about 30 $\mu$s, assuming that the accumulation time in the CCD detector 55 is 3 ms, for example, the proper response is possible. In this case, the AOTF 35 allows every non-diffracting beam to simply pass therethrough, and only any unwanted wavelength component is electrically selected and is eliminated as a diffracting beam in a time-sharing manner. On the other hand, with the use of the driver, the power of any designated wavelength component is eliminated not in a time-sharing manner but by modulation of the ultrasound amplitude intensity. As such, the CARS spectroscopy is performed using the flat Stokes-beam intensity distribution in the wave number of 200 to 3000 $cm^{-1}$.

As described above, with the nonlinear Raman spectroscopic apparatus in this fifth embodiment, the AOTF is used to adjust the sample irradiation time for the wavelength component in any region not flat in the Stokes-beam intensity distribution, thereby making uniform the average intensity in the light accumulation time of the CCD detector. This accordingly leads to the Stokes-beam intensity distribution being effectively flat. Herein, the configuration and effect of the nonlinear Raman spectroscopic apparatus not described in this embodiment above are similar to those in the modification of the fourth embodiment described above. Fig. 22 shows the apparatus provided with the time-difference measurement section 160, but the present disclosure is surely not restrictive thereto, and the configuration of this embodiment is applicable to the nonlinear Raman spectroscopic apparatus not provided with the time-difference measurement section as shown in Fig. 15, and if this is the configuration, the similar effect is produced.

[7. Sixth Embodiment]

[Entire Configuration of Apparatus]

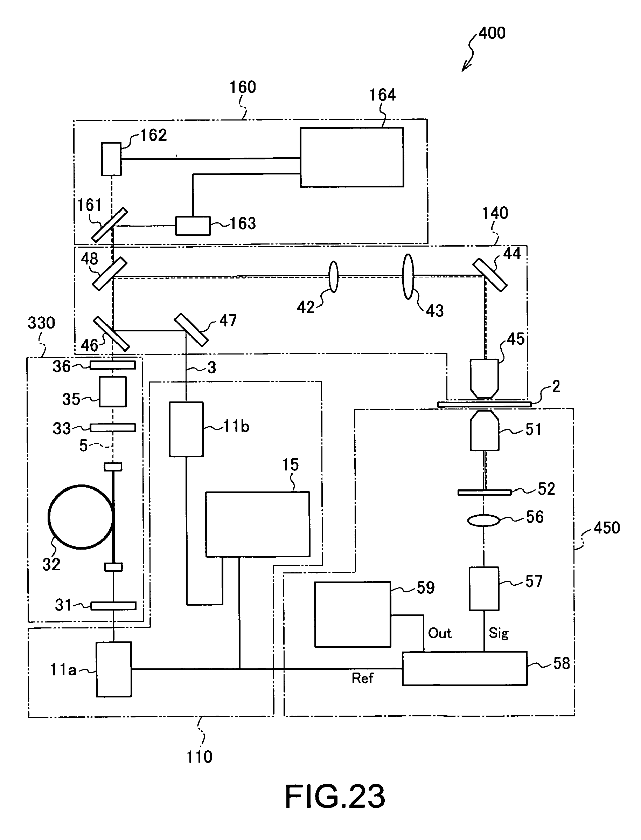

Described next is a nonlinear Raman spectroscopic apparatus according to a sixth embodiment of the present disclosure. Fig. 23 is a diagram schematically showing the configuration of the nonlinear Raman spectroscopic apparatus of the sixth embodiment. In Fig. 23, any component similar to that of the nonlinear Raman spectroscopic apparatus 300 in the fifth embodiment of Fig. 22 is provided with the same reference numeral, and is not described in detail again. As shown in Fig. 23, in the nonlinear Raman spectroscopic apparatus 400 in this sixth embodiment, a measurement section 450 is provided with a lock-in amplifier 58.

[Measurement Section 450]

The measurement section 450 is provided with the objective lens 51, the short-pass filter 52, a condenser 56, a photodetector 57 such as photomultiplier tube or avalanche photodiode, the lock-in amplifier 58, a computer 59, and others. The CARS light emitted from the sample 2 is gathered by the objective lens 51, and then any unwanted light such as the pump beam 3 and the Stokes beam 5 is blocked by the short-pass filter 52. The resulting light then enters the photodetector 57 via the condenser 56. The signal from the photodetector 57 is input to the lock-in amplifier 58, and then is output therefrom to the computer 59.

[Operation]

In this nonlinear Raman spectroscopic apparatus 400, for generating a Stokes beam with a single wavelength, the AOTF 35 and the analyzer 36 (or the PBS) are provided in the subsequent stage, and the continuous white light is subjected to wavelength selection or wavelength sweep. The AOTF 35 is high in spectral resolving power and resolving efficiency, and is fast in wavelength change (or in speed of sweeping) generally with 10 to 100 ms.

In consideration thereof, the pump beam and the selected Stokes beam are determined by wavelength to derive a beat frequency equal to the vibration frequency of the molecular vibration spectrum being a target. The sample 2 is then irradiated with the resulting beams at the same time. This allows a high-speed measurement of any amount of change in a target molecular vibration spectrum, or a high-speed spatial distribution of the molecular vibration spectrum, i.e., microspectroscopic imaging thereof, for example.

That also allows a high-speed wavelength selection of the Stokes beam using the AOTF in a plurality of target molecular vibration spectra. Therefore, with respect to one specific molecular vibration spectrum intensity being a reference, an intensity ratio of the remaining molecular vibration spectra thereto is measured or imaged, for example. The quantitative ratio measurement or ratiometric measurement as such are especially useful for imaging of biological matters in which molecular concentration is not uniform, for example.

For a measurement of the spectrum in its entirety, the wavelength sweep is performed. In this case, used as a reference signal of the lock-in amplifier 58 is a synchronizing signal in a repetition pulse train of the active Q-switched short-pulse laser 11b for the pump/probe beam or the short-pulse laser 11a for Stokes beam excitation use. The repetition frequency of the active Q-switched short-pulse laser is generally 1 KHz to 1 MHz, and thus a photodetector such as general photomultiplier tube or avalanche photodiode is used. The time constant of the lock-in amplifier 58 in use is the reciprocal of the frequency being 1/10 to 1/1000 of the frequency of the reference signal. By the lock-in detection of signals as such, the detection is performed with a high SNR (Signal-to-Noise Ratio) and high sensitivity.

With the CARS measurement using the nonlinear Raman spectroscopic apparatus 400, only the degenerate four-wave mixing process occurs. Therefore, when the active Q-switched short-pulse laser has a high level of amplitude noise, that is, when the peak power largely varies between the continuous pulse trains, the lock-in amplifier 58 may be provided with a CARS signal being a result of division by a square of the intensity of a power monitor optical signal of the pump/probe beam 3, or a result of division by a power monitor optical signal of the Stokes beam.

In the active Q-switched short-pulse laser, the cycle of the repetition pulse trains is about 1 to 1000 $\mu$m, and the CARS process is completed fast within 0.1 to 30 ps. Accordingly, by using a synchronizing signal of the repetition pulse train of the active Q-switched short-pulse laser as a trigger signal of a boxcar integrator (gate integrator), the gate integral time is set to an electrically minimum time, e.g., less than 10 ns, and desirably 1 ns, so that the detection with a high SNR is possible. That is, with the nonlinear Raman spectroscopic apparatus 400 in this embodiment, highly-sensitive multi-wavelength CARS spectroscopy is realized using the AOTF 35.

Note that the nonlinear Raman spectroscopic apparatuses in the first to sixth embodiments described above are to be each used as a microscopic apparatus or a microscopic imaging apparatus, for example.

The present disclosure is also possibly in the following structures.

1. A nonlinear Raman spectroscopic apparatus, including:

two light sources each configured to emit short-pulse laser light; and
a pulse control section configured to time-delay the short-pulse laser light emitted from one of the light sources.

2. The nonlinear Raman spectroscopic apparatus according to 1, in which
the two light sources include a first light source configured to generate the short-pulse laser light, and a second light source configured to generate the short-pulse laser light with a wavelength longer than that of the first light source, and
the pulse control section time-delays the short-pulse laser light emitted from the second light source.

3. The nonlinear Raman spectroscopic apparatus according to 2, in which
the short-pulse laser light emitted from the first light source includes a Stokes beam, and the light from the second light source is a pump/probe beam, and

by the pulse control section time-delaying the short-pulse laser light emitted from the second light source, a sample being a measurement target is irradiated with the Stokes beam and the pump/probe beam at the same time.

4. The nonlinear Raman spectroscopic apparatus according to 2 or 3, further including

a single-mode fiber configured to generate the Stokes beam being continuous white light from the short-pulse laser light emitted from the first light source.

5. The nonlinear Raman spectroscopic apparatus according to any of 2 to 4, in which

the pulse control section time-delays the short-pulse laser light by electrically controlling the second light source.

6. The nonlinear Raman spectroscopic apparatus according to any of 1 to 5, further including

a detection section configured to multiplex the Stokes beam and the pump/probe beam and detect a time difference therebetween, in which

a detection result of the detection section is fed back to the pulse control section.

7. The nonlinear Raman spectroscopic apparatus according to 4, in which

an acousto-optic tunable filter is provided in the stage subsequent to the single-mode fiber.

8. The nonlinear Raman spectroscopic apparatus according to 7, in which

the intensity distribution of the Stokes beam is used as a basis to modulate one of a wavelength selection time and an ultrasound intensity of the acousto-optic tunable filter.

9. The nonlinear Raman spectroscopic apparatus according to 7 or 8, in which

by using the acousto-optic tunable filter, the wavelength selection corresponding to a plurality of molecular vibration spectra is performed to measure a coherent anti-Stokes Raman scattering spectrum intensity, and perform one of measurement and imaging of a quantitative ratio with respect to a reference spectrum intensity.

10. A microspectroscopic apparatus, including the nonlinear Raman spectroscopic apparatus according to any of 1 to 9.

11. A microspectroscopic imaging apparatus, including the nonlinear Raman spectroscopic apparatus according to any of 1 to 9.

The present disclosure contains subject matter related to that disclosed in Japanese Priority Patent Application JP 2011-108324 filed in the Japan Patent Office on May 13, 2011, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

**Claims**

1. A nonlinear Raman spectroscopic apparatus, comprising:

    two light sources each configured to emit short-pulse laser light; and
    a pulse control section configured to time-delay the short-pulse laser light emitted from one of the light sources.

2. The nonlinear Raman spectroscopic apparatus according to claim 1, wherein
    the two light sources include a first light source configured to generate the short-pulse laser light, and a second light source configured to generate the short-pulse laser light with a wavelength longer than that of the first light source, and
    the pulse control section time-delays the short-pulse laser light emitted from the second light source.

3. The nonlinear Raman spectroscopic apparatus according to claim 2, wherein
    the short-pulse laser light emitted from the first light source includes a Stokes beam, and the light from the second light source is a pump/probe beam, and
    by the pulse control section time-delaying the short-pulse laser light emitted from the second light source, a sample being a measurement target is irradiated with the Stokes beam and the pump/probe beam at the same time.

4. The nonlinear Raman spectroscopic apparatus according to claim 3, further comprising
    a single-mode fiber configured to generate the Stokes beam being continuous white light from the short-pulse laser light emitted from the first light source.

5. The nonlinear Raman spectroscopic apparatus according to claim 2, wherein
    the pulse control section time-delays the short-pulse laser light by electrically controlling the second light source.

6. The nonlinear Raman spectroscopic apparatus according to claim 5, further comprising
a detection section configured to multiplex the Stokes beam and the pump/probe beam and detect a time difference therebetween, wherein
a detection result of the detection section is fed back to the pulse control section.

7. The nonlinear Raman spectroscopic apparatus according to any one of claims 1 to 6, wherein
an acousto-optic tunable filter is provided in a stage subsequent to the single-mode fiber.

8. The nonlinear Raman spectroscopic apparatus according to claim 7, wherein
an intensity distribution of the Stokes beam is used as a basis to modulate one of a wavelength selection time and an ultrasound intensity of the acousto-optic tunable filter.

9. The nonlinear Raman spectroscopic apparatus according to any one of claims 7 or 8, wherein
by using the acousto-optic tunable filter, the wavelength selection corresponding to a plurality of molecular vibration spectra is performed to measure a coherent anti-Stokes Raman scattering spectrum intensity, and perform one of measurement and imaging of a quantitative ratio with respect to a reference spectrum intensity.

10. A microspectroscopic apparatus, comprising the nonlinear Raman spectroscopic apparatus according to any one of claims 1 to 9.

11. A microspectroscopic imaging apparatus, comprising the nonlinear Raman spectroscopic apparatus according to any one of claims 1 to 9.

FIG.1

FIG.2

FIG.3

FIG.4

FIG.5

FIG.6

FIG.7

FIG.8

FIG.9

FIG.10

FIG.11

FIG.12

FIG.13

FIG.14

FIG.15

FIG.16

FIG.17

FIG.18

FIG.19

FIG.20

FIG.21

FIG.22

FIG.23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5288681 A
- JP 2006276667 A
- JP 2010002256 A
- JP 2004061411 A
- JP 3691813 B
- JP 2009222531 A
- JP 2011108324 A

**Non-patent literature cited in the description**

- **YOUNG JONG LEE ; MARCUS T. CICERONE.** Single-shot interferometric approach to background free broadband coherent anti-Stokes Raman scattering spectroscopy. *OPTICS EXPRESS,* 05 January 2009, vol. 17 (1), 123